(19) Europäisches Patentamt

European Patent Office

Office européen des brevets

(11) **EP 2 347 350 B1**

(12) **EUROPEAN PATENT SPECIFICATION**

(45) Date of publication and mention
of the grant of the patent:
**12.02.2020 Bulletin 2020/07**

(21) Application number: **09752219.7**

(22) Date of filing: **08.10.2009**

(51) Int Cl.:
***G06F 17/30*** *(2006.01)*

(86) International application number:
**PCT/GB2009/051341**

(87) International publication number:
**WO 2010/041074 (15.04.2010 Gazette 2010/15)**

(54) **ENCODING AND DECODING METHOD AND APPARATUS FOR MULTIMEDIA SIGNATURES**

KODIERUNGS- UND DEKODIERUNGSVERFAHREN UND VORRICHTUNG FÜR MULTIMEDIA-SIGNATUREN

PROCÉDÉ ET APPAREIL DE CODAGE ET DE DÉCODAGE POUR SIGNATURES MULTIMÉDIAS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.10.2008 GB 0818463**

(43) Date of publication of application:
**27.07.2011 Bulletin 2011/30**

(73) Proprietor: **Rakuten, Inc.
Tokyo 158-0094 (JP)**

(72) Inventors:
• **BRASNETT, Paul
Surrey KT5 8JW (GB)**
• **BOBER, Miroslaw
Surrey GU1 2SE (GB)**

(74) Representative: **EIP
EIP Europe LLP
Fairfax House
15 Fulwood Place
London WC1V 6HU (GB)**

(56) References cited:
**US-A1- 2001 025 283    US-A1- 2007 078 846
US-A1- 2007 127 813**

• **HAWLEY K RISING III: "A Proposal for Using
Entropy to Measure the Quality of Descriptors
and Description Schemes", 50. MPEG MEETING;
06-12-1999 - 10-12-1999; MAUI; (MOTION
PICTUREEXPERT GROUP OR ISO/IEC
JTC1/SC29/WG11),, no. M5612, 29 November
1999 (1999-11-29), XP030034801, ISSN:
0000-0297**

## Description

### Background

The present invention relates to the processing of signatures that represent multimedia content and, more particularly, to a method and apparatus for encoding and decoding such signatures.

An item of multimedia content can be represented by a "signature" (also known as "robust hash" or "fingerprint"). A signature provides a compact, unique and robust description based on the content. For example, co-pending European patent application number EP 06255239.3, and UK patent application numbers GB 0700468.2, GB 0712388.8, GB 0719833.6 and GB 0800364.2, describe signatures for images, also known as "image descriptors" or "image identifiers". European patent application EP-A-1 550 297 describes a signature for audio content and US patent application US-A-2007/0253594 describes a signature for video content.

Multimedia signatures typically comprise a plurality of components comprising numbers, often these numbers are in binary space. The signatures can be used for identifying, searching and locating identical or near-duplicate content.

With the vast amount of multimedia data being generated it is clearly a requirement that searches are performed very quickly with low complexity.

US 2001/0025283 A1 relates to an apparatus and a method for vector descriptor representation and multimedia data retrieval, which can quantize a plurality of feature values described by a vector descriptor respectively, represent the quantized feature values in the form of bit or orthogonally transform the quantized bector feature values, and rearrange the feature values represented in the form of bit from the highest bit to the lowest bit or rearrange the transformed coefficient from low frequency to high frequency to represent the vector descriptor hierarchically.

US 2007/0078846 A1 relates to a method for determining if a set of images in a large collection of images are near duplicates is described. The method includes processing the set of images, generating an image signature for each image in the set of images, and comparing the generated image signatures. The method can be used in clustering and ranking of images.

HAWLEY K RISING III: "A Proposal for Using Entropy to Measure the Quality of Descriptors and Description Schemes", 50. MPEG MEETING; 06-12-1999 - 10-12-1999; MAUI; (MOTION PICTUREEXPERT GROUP OR ISO/I EC JTC1/SC29/WG11), no. M5612, 29 November 1999 (1999-11-29) relates to methods for using the entropy of performing a classification task as a means for comparing descriptors and description schemes for quality, in particular, the broader range such measures have than metric-query tasks, and the use of such methods for generating internal information for complex description schemes.

### Summary

The present invention relates to a method for encoding a signature of an image as set out in claim 1, a method for image searching as set out in claim 6 and an apparatus as set out in claim 7.

In one embodiment, a binary signature, such as the one described in EP 06255239.3, uniquely represents multimedia content. As described in EP 06255239.3 the signature may be represented as a binary string. The signatures may be encoded, stored and/or transmitted as a bitstream or in some other suitable format such as XML The encoded bitstream (or other data structure) containing the signatures may be received and decoded for use in content searching and matching.

A key aspect to the encoding of the signature is a priority ordering of the components of the signature. In one embodiment, a signature comprising a predetermined number of bits is encoded so that the signature bits with the highest priority are placed first in the encoded data structure, such as a bitstream. Preferably, the priority ordering of components, such as the bits, of the signature is based on their entropy. Suitable techniques for ordering the components of a signature in priority order, and the technical advantages arising therefrom, are described below.

Advantageously, the encoding and decoding techniques of the present invention support fast, scalable searching and hashing.

### Brief Description of the Drawings

Figure 1 illustrates the probability that a component bit of an exemplary 512 bit image signature is equal to 1, determined using a technique that may be implemented in an embodiment of the present invention;

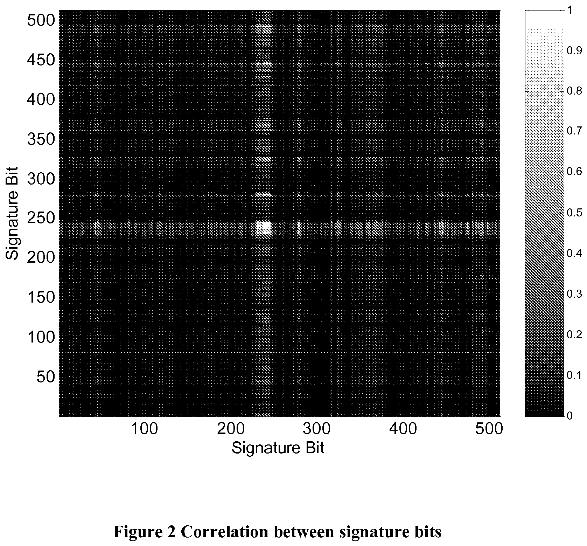

Figure 2 illustrates a correlation between bits of the 512 bit image signature of Figure 1, determined using a technique that may be implemented in an embodiment of the present invention;

Figure 3 illustrates the entropy for an exemplary 512 bit signature;

Figure 4 is a flow diagram illustrating a method for encoding multimedia signatures, in accordance with an embodiment of the present invention, and

Figure 5 is a schematic diagram of a system for encoding and decoding multimedia signatures, in accordance with embodiments of the present invention.

**Detailed Description of the Embodiments**

The following description is concerned with the encoding and decoding of signatures of images, derived using one or more of the methods mentioned above. It will be appreciated, however, that the encoding and decoding techniques can be used with signatures derived from other types of multimedia content, which may be derived using any suitable technique.

Accordingly, the following description relates to the encoding and decoding of the signature of an image, composed of a binary string.

In particular, a signature S of an image $I(x,y)$ is composed of a set of n-bits with indexes from 0 to $n$-1:

$$S(I(x,y)) = \{s_0, s_1, \ldots s_{n-1}\}.$$

In general, each bit ($s_0$ to $s_{n-1}$) in the image signature $S$ will have individual characteristics relating to the expected value, independence and robustness. The characteristics of each bit ($s_i$) can be determined experimentally by evaluating signatures extracted from a set of data (i.e. signatures of a plurality of images). Desirably this experimental data set will be large.

Based on these characteristics the bits in the signature can be evaluated to obtain a priority score for each bit ($s_0$ to $s_{n-1}$) with the highest score being given to the most informative bits. For this purpose, a heuristic can be used to determine the priority order of the bits based on experimental evaluation.

In one preferred embodiment a function $f$ is used to determine the priority score based on the entropy value for each bit:

$$f(s_i) = -p_1(s_i)\log_2 p_1(s_i) - p_0(s_i)\log_2 p_0(s_i),$$

where $p_1(s_i)$ is the probability that $s_i$ is 1 $p(s_i = 1)$ and $p_0(s_i) = 1 - p_1(s_i)$ is the probability that $s_i$ is 0. The entropy is in the range 0 to 1, with a higher value means higher entropy, the value reaches a maximum when

$$p(s_i = 1) = p(s_i = 0) = 0.5.$$

The probabilities for the bits of the signature $p(s_i = 1)$ can be estimated by extracting and evaluating signatures from a large dataset of $M$ images:

$$\hat{p}(s_i = 1) \approx \frac{1}{M}\sum_m s_i$$

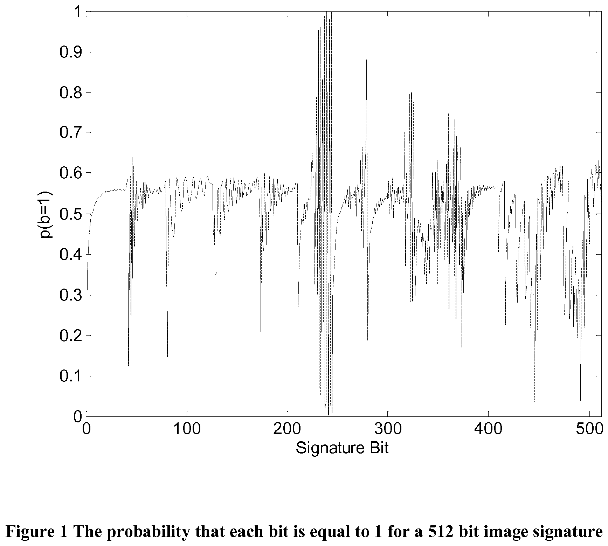

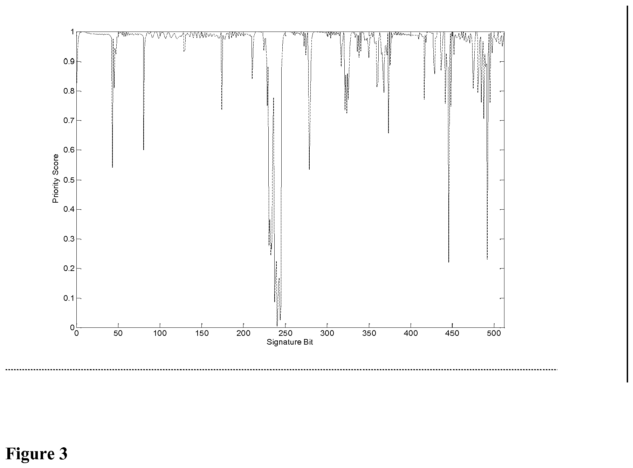

Figure 1 shows, by way of example, an estimate of the probability $p(s_i = 1)$ of each bit in a 512 bit image signature, determined experimentally. It will be appreciated that other functions may be used to evaluate the components of a signature to determine their entropy. Figure 3 shows the corresponding priority scores $f(s_i)$ for the same exemplary 512 bit image signature.

The priority scores $f(s_i)$ for the signature bits ($s_0$ to $s_{n-1}$) are arranged into descending order, that is the bit with the highest score first, maintaining the indexes of the bits in $S$:

$$f(s_i) \geq f(s_j) \geq \cdots \geq f(s_k).$$

This priority ordering can then be used for the encoding of the bits ($s_0$ to $s_{n-1}$) of image signatures $S$ as described below.

In an alternative embodiment, the inter-bit dependence (e.g. expressed by correlation) can also be considered as part of the priority ordering heuristic. Once an initial ordering has been obtained $f(s_i) \geq f(s_j) \geq \cdots \geq f(s_k)$, for instance in accordance with the embodiment described above, the correlation of every bit with every higher priority bit is considered.

The correlation $c \in (0,1]$ can be found experimentally on a set of data, where 0 represents uncorrelated bits and 1 represents correlated bits. The maximum of the correlation with all higher priority bits is then found:

$$c_{\max}\left(s_j\right),$$

and a new priority score can be obtained

$$g(s_j) = f\left(s_j\right) + \alpha c_{\max}\left(s_j\right),$$

where $\alpha$ is a design parameter to determine the influence of the correlation of the ordering. An updated priority ordering is then obtained

$$g\left(s_i\right) \geq g\left(s_j\right) \geq \ldots \geq g\left(s_k\right).$$

Note that the first bit is always the same after this second priority ordering.

Thus, in this alternative embodiment, the updated priority ordering can then be used for the encoding of the bits ($s_0$ to $s_{n-1}$) of image signatures $S$ as described below.

In particular, the indexes of the bits ($s_0$ to $s_{n-1}$) in S are now obtained from the relevant priority ordering:

$$i, j, \ldots, k .$$

Using these indexes the bits of the signature are encoded into a bitstream (or other structure) in the determined priority ordering:

$$\overline{S} = \left\{s_i, s_j, \ldots, s_k\right\}.$$

By way of example, the bitstream syntax that contains three image priority ordered image signatures, derived using the method of GB 0807411.4 is given below.

| ImageSignature { | Number of bits | Mnemonics |
|---|---|---|
| GlobalSignatureA | 512 | bslbf |
| GlobalSignatureB | 512 | bslbf |
| FeaturePointCount | 8 | uimsbf |
| for(k=0; k<NumberOfPoints; k++) { | | |
| Xcoord | 8 | uimsbf |
| Ycoord | 8 | uimsbf |
| Direction | 4 | uimsbf |
| LocalSignature | 60 | bslbf |
| } | | |
| } | | |

The XML schema corresponding to the bitstream is given below.

```xml
<complexType name="ImageSignatureType" final="#all">
 <complexContent>
   <extension base="mpeg7:VisualDType">
     <sequence>
       <element name="GlobalSignatureA">
         <simpleType>
           <restriction>
             <simpleType>
               <list itemType="mpeg7:unsigned1" />
             </simpleType>
             <length value="512" />
           </restriction>
         </simpleType>
       </element>
     </sequence>
       <sequence>
       <element name="GlobalSignatureB">
         <simpleType>
           <restriction>
             <simpleType>
               <list itemType="mpeg7:unsigned1" />
             </simpleType>
             <length value="512" />
           </restriction>
         </simpleType>
       </element>
       <element name="LocalSignature">
         <complexType>
           <sequence>
             <element name="FeaturePointCount">
               <simpleType>
                 <restriction base="nonNegativeInteger">
                   <minInclusive value="32" />
                   <maxInclusive value="80" />
                 </restriction>
               </simpleType>
             </element>
             <element name="FeaturePoint" minOccurs="32"
maxOccurs="80">
               <complexType>
                 <sequence>
                   <element name="XCoord" type="mpeg7:unsigned8"/>
                   <element name="YCoord" type="mpeg7:unsigned8"/>
                   <element name="Direction"
type="mpeg7:unsigned4"/>
                   <element name="LocalSignature">
                     <simpleType>
                       <restriction>
                         <simpleType>
                           <list itemType="mpeg7:unsigned1"/>
                         </simpleType>
                         <length value="60" />
                       </restriction>
                     </simpleType>
                   </element>
                 </sequence>
               </complexType>
             </element>
           </sequence>
         </complexType>
       </element>
     </sequence>
   </extension>
```

```
    </complexContent>
    </complexType>
```

The bitstream (or other structure) is decoded by reading in the priority ordered signature up to the required number of bits. In particular, a decoding method receives the encoded bitstream (or other data structure) and decodes only the first m bits from the n bit signature in the bitstream, for use in image searching and matching. Since the priority ordered signatures in the encoded bitstream store the most informative bits first, the decoding technique decodes the most relevant bits first, thereby enabling fast searching and matching because only the m most relevant bits are used when comparing two signatures. In addition, the decoding technique provides a scalable signature. The following advantages arise from such a system.

First, it is possible to find the distance (e.g. Hamming distance) between two signatures, this is a coarse level distance that would be less robust and/or independent than the distance calculated on the full n-bits. The complexity of the distance calculation is linearly related to the number of bits so using fewer bits m provides lower computational requirements.

Secondly, it is possible to create a hash table, based on the m-bits, of the signature's structure for rapidly reducing the search space to k-nearest neighbours. In a preferred embodiment m is 8, giving a 256 element hash table and k is 1 therefore the search space is reduced to approximately 8/256 of the original size.

Finally, it is possible to reduce search times by eliminating low probability matches. If a search is to be carried out to find all signatures with a normalised distance below a threshold $T_1$ from a query signature then in a preferred embodiment the first m bits are compared and only if the normalised distance is below $T_2$ are all n bits extracted and compared. If the normalised distance is above $T_2$ then the two signatures are declared different. In the preferred embodiment $T_2 = T_1 + \varepsilon$, where $\varepsilon \geq 0$. In such a searching method, images that are declared to be similar, based upon the comparison of the first m-bits and/or all n bits, may be provided as search results (for example by displaying the corresponding images on a display screen)

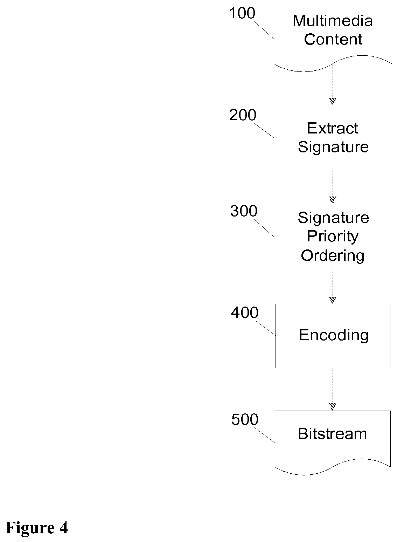

Figure 4 is a flow diagram showing a method for encoding multimedia signatures according to an embodiment of the present invention.

The method starts at step 100, which receives the multimedia content to be encoded.

At step 200, for each part of the multi-media content that is to be encoded separately (e.g. each image), a predefined content-based signature is extracted. As described above, the signature comprises a predetermined number of signature components such as a number of binary bits. Any suitable technique for extracting such a signature from the received multimedia content may be used. For example, if the multimedia content comprises still images, a signature to each image may be derived by processing the image using one or more of the techniques described in the aforementioned patent applications EP 06255239.3, GB 0700468.2, GB 0712388.8, GB 0719833.6 and GB 0800364.2

At step 300, a priority ordering is derived for at least some of the components of the predefined signature. The priority ordering may be determined using one of the above-described techniques of the embodiments, or any other suitable technique.

At step 400, each signature is encoded according to the priority ordering determined in step 300.

Finally, at step 500, the encoded signatures are provided as a bitstream (or other data structure) which may be transmitted or stored for use by a decoder. The data structure may be transmitted or stored in binary or XML format, as discussed above, or any other suitable format.

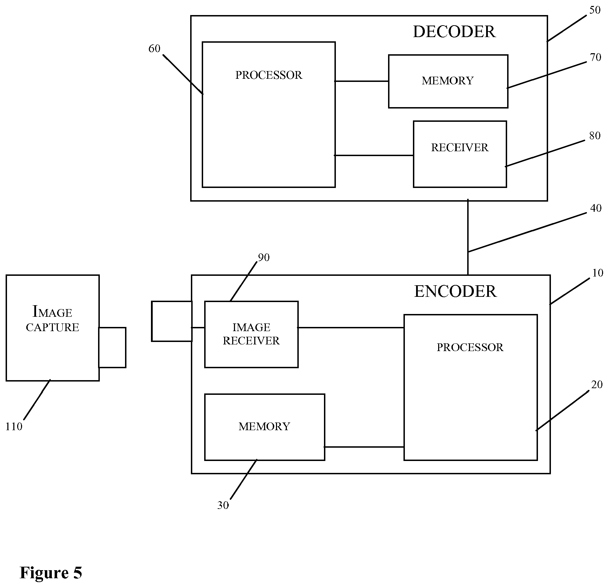

The above-described method of encoding may be performed in an encoding apparatus 10 comprising a processor 20, as illustrated in Figure 5. Typically, the method is implemented in the form of a computer program comprising instructions, executable by the processor 20, to perform the above described method steps.

A corresponding decoding method may be performed in a decoding apparatus 50 comprising a processor 60, as illustrated in Figure 5. Typically, the decoding method is implemented in the form of a computer program comprising instructions, executable by the processor 60. The decoding method comprises receiving and decoding the first m components (e.g. bits) of each encoded signature in the received data structure (e.g. bitstream), which can then be used for image searching and matching, as described above.

Referring in detail to Figure 5, an encoder 10 receives images at an image receiver module 90 from an image capture device, such as a camera 110. Encoder processor 20 processes the images, and encodes signatures corresponding to the images, in accordance with the above described techniques. Optionally, encoder processor 20 stores the encoded image signatures, and corresponding images, in memory 30.

Encoder processor 20 may further transmit the encoded image signatures (e.g. as an encoded bitstream), and optionally the corresponding images, over a communication link 40 to a receiver 80 of decoder 50. Decoder processor 60 decodes the received image signatures, in accordance with the above described techniques. Optionally, decoder processor 60 stores the decoded image signatures, and corresponding images, in memory 70. Decoder processor may further perform image searching and matching using decoded image signatures stored in memory 70, in accordance with the above described techniques.

## Alternative implementations

In alternative implementations, a signature may be comprised of non-binary data components. This may also be arranged by priority order and encoded into a bitstream or other data structure.

The described embodiments order all of the bits in a signature by their priority. As the skilled person will appreciate, it may not be necessary or desirable to order all bits in such a way. Thus, alternative implementations include a partially priority ordered encoding, where the highest m-bits are encoded based on priority ordering and then the remaining bits in their original order.

A priority order may be formed from any type of signature extracted from any type of multimedia content, including still and moving images, audio content etc

As the skilled person will appreciate, many variations and modifications may be made to the described embodiments.

## Claims

1.   A computer implemented method for encoding a first signature of an image, said signature being composed of a first binary string;
determining experimentally an entropy value for each of the bit locations of a second binary string representative of a signature based on evaluation of a data set of signatures extracted from a data set of images,
determining a priority score for each bit location of the second binary string, based on the entropy value determined for each corresponding bit location of the second binary string,
encoding the first signature by arranging the bits of the first signature in order of decreasing priority score, with the highest priority score being given to the most informative bits.

2.   A method as claimed in claim 1, further comprising determining an estimated entropy value for each of the bit locations of the second binary string using at least one probability distribution in the data set of signatures.

3.   A method as claimed in claim 1 or claim 2, further comprising determining an inter-dependence of each of the bit locations of the second binary string, and updating the priority scores of the bit locations in the second binary string further based on said determined inter-dependence, wherein determining an inter-dependence of each of the bit locations comprises finding the correlation of each bit location with every other bit location of the second binary string that has a higher priority score.

4.   A method as claimed in claim 3, comprising encoding the bits of the first signature by arranging them according to the updated priority scores.

5.   A method as claimed in any preceding claim, further comprising transmitting or storing the encoded first signature in a predefined format.

6.   A computer implemented method for image searching, comprising:

    receiving a first signature of a query image encoded using the method of any preceding claim;
    decoding the first m bits of the signature of the query image;
    determining a distance, between the first m bits of the first signature of the query image and corresponding bits of the signature of one or more reference images encoded using the method of any preceding claim; and
    selecting reference images for which the determined distance is below a predetermined threshold,
    providing the selected images as the result of the search.

7.   Apparatus comprising means for executing instructions which perform a method as claimed in any one of claims 1 to 6.

## Patentansprüche

1.   Computerimplementiertes Verfahren zum Codieren einer ersten Signatur eines Bildes, wobei die Signatur aus einem ersten binären String besteht,
Bestimmen eines Entropiewerts in experimenteller Weise für jede der Bitpositionen eines zweiten Binärstrings, der für eine Signatur repräsentativ ist, auf Basis einer Evaluation eines Datensatzes an Signaturen, die aus einem Datensatz an Bildern extrahiert sind,
Bestimmen eines Prioritätsergebnisses für jede Bitposition des zweiten Binärstrings auf Basis des Entropiewerts, der für jede entsprechende Bitposition des zweiten Binärstrings bestimmt ist,
Codieren der ersten Signatur durch Anordnen der Bits der ersten Signatur in Reihenfolge eines absteigenden Prioritätsergebnisses, wobei das höchste Prioritätsergebnis den meist-informativen Bits gegeben wird.

2. Verfahren nach Anspruch 1, ferner mit einem Bestimmen eines abgeschätzten Entropiewerts für jede der Bitpositionen des zweiten Binärstrings unter Verwendung wenigstens einer Wahrscheinlichkeitsverteilung in dem Datensatz an Signaturen.

3. Verfahren nach Anspruch 1 oder 2, ferner mit einem Bestimmen einer Interdependenz jeder der Bitpositionen des zweiten Binärstrings und einem Aktualisieren der Prioritätsergebnisse der Bitpositionen in dem zweiten Binärstring ferner auf Basis der bestimmten Interdependenz, wobei das Bestimmen einer Interdependenz eine jeden der Bitpositionen ein Finden der Korrelation einer jeden Bitposition mit jeder anderen Bitposition des zweiten Binärstrings umfasst, die ein höheres Prioritätsergebnis besitzt.

4. Verfahren nach Anspruch 3, ferner mit einem Codieren der Bits der ersten Signatur durch Anordnen derselben gemäß den aktualisierten Prioritätsergebnissen.

5. Verfahren nach einem vorstehenden Anspruch, ferner mit einem Übermitteln oder Speichern der codierten ersten Signatur in einem vorbestimmten Format.

6. Computerimplementiertes Verfahren zur Bildsuche mit:

Empfangen einer ersten Signatur eines Anfragebildes, die unter Verwendung des Verfahrensnach einem vorstehenden Anspruch codiert wurde,
Decodieren der ersten m Bits der Signatur des Anfragebildes,
Bestimmen einer Distanz zwischen den ersten m Bits der ersten Signatur des Anfragebildes und entsprechenden Bits der Signatur eines oder mehrerer Referenzbilder, die unter Verwendung des Verfahrens nach einem vorstehenden Anspruch codiert wurde, und
Auswählen von Referenzbildern, für die die bestimmte Distanz unterhalb eines vorbestimmten Schwellwerts liegt,
Bereitstellen der ausgewählten Bilder als das Ergebnis der Suche.

7. Vorrichtung mit Mitteln zum Ausführen von Instruktionen die ein Verfahren nach einem der Ansprüche 1 bis 6 ausführen.

**Revendications**

1. Procédé mis en œuvre par ordinateur pour coder une première signature d'une image, ladite signature étant composée d'une première chaîne binaire ;
déterminer expérimentalement une valeur d'entropie pour chacun des emplacements de bits d'une deuxième chaîne binaire représentant une signature en se basant sur l'évaluation d'un ensemble de données de signatures extraites d'un ensemble de données d'images,
déterminer un score de priorité pour chaque emplacement de bit de la deuxième chaîne binaire, en se basant sur la valeur d'entropie déterminée pour chaque emplacement de bit correspondant de la deuxième chaîne binaire,
coder la première signature en disposant les bits de la première signature dans l'ordre décroissant du score de priorité, le score de priorité le plus élevé étant attribué aux bits les plus informatifs.

2. Procédé tel que revendiqué dans la revendication 1, comprenant en outre la détermination d'une valeur d'entropie estimée pour chacun des emplacements de bits de la deuxième chaîne binaire en utilisant au moins une distribution de probabilité dans l'ensemble de données de signatures.

3. Procédé tel que revendiqué dans la revendication 1 ou 2, comprenant en outre la détermination d'une interdépendance de chacun des emplacements de bits de la deuxième chaîne binaire, et la mise à jour des scores de priorité des emplacements de bits dans la deuxième chaîne binaire en outre sur la base de ladite interdépendance déterminée, où la détermination d'une interdépendance de chacun des emplacements de bits comprend le fait de trouver la corrélation de chaque emplacement de bit avec chacun des autres emplacements de bits de la deuxième chaîne binaire qui a un score de priorité plus élevé.

**4.** Procédé tel que revendiqué dans la revendication 3, comprenant le codage des bits de la première signature en les disposant selon les scores de priorité mis à jour.

**5.** Procédé tel que revendiqué dans l'une des revendications précédentes, comprenant en outre la transmission ou le stockage de la première signature codée dans un format prédéfini.

**6.** Procédé mis en œuvre par ordinateur pour la recherche d'images, comprenant le fait :

de recevoir une première signature d'une image de requête codée en utilisant le procédé de l'une des revendications précédentes ;
de décoder les premiers m bits de la signature de l'image de requête ;
de déterminer une distance, entre les premiers m bits de la première signature de l'image de requête et des bits correspondants de la signature d'une ou de plusieurs images de référence codées en utilisant le procédé de l'une des revendications précédentes ; et
de sélectionner des images de référence pour lesquelles la distance déterminée est inférieure à un seuil prédéterminé,
de fournir les images sélectionnées comme résultat de la recherche.

**7.** Appareil comprenant un moyen pour exécuter des instructions qui réalisent un procédé tel que revendiqué dans l'une quelconque des revendications 1 à 6.

**Figure 1 The probability that each bit is equal to 1 for a 512 bit image signature**

**Figure 2 Correlation between signature bits**

**Figure 3**

100 Multimedia Content

200 Extract Signature

300 Signature Priority Ordering

400 Encoding

500 Bitstream

**Figure 4**

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 06255239
- GB 0700468 A
- GB 0712388 A
- GB 0719833 A
- GB 0800364 A
- EP 1550297 A
- US 20070253594 A
- US 20010025283 A1
- US 20070078846 A1
- GB 0807411 A

### Non-patent literature cited in the description

- **HAWLEY K RISING III.** A Proposal for Using Entropy to Measure the Quality of Descriptors and Description Schemes. *50. MPEG MEETING; 06-12-1999 - 10-12-1999; MAUI; (MOTION PICTUREEXPERT GROUP OR ISO/I EC JTC1/SC29/WG11),* 29 November 1999